# EUROPÄISCHE PATENTANMELDUNG

(11) **EP 1 394 516 A2**
(43) Veröffentlichungstag der Anmeldung: **03.03.2004**
(21) Anmeldenummer: 03018273.7
(22) Anmeldetag: 12.08.2003
(51) Int. Cl.: G01F 1/68

(54) **Vorrichtung zum Erkennen einer Strömung und/oder zum Messen der Temperatur des strömenden Mediums in einem Strömungsweg**

(30) Priorität: 21.08.2002 DE 10238227
(71) Anmelder: ROBERT BOSCH GMBH, 70442 Stuttgart (DE)
(72) Erfinder: Goesling, Bernulf, 73760 Ostfildern (DE)

(57) **Zusammenfassung**

Die Erfindung betrifft eine Vorrichtung zum Erkennen einer Strömung und/oder Messen der Temperatur des strömenden Mediums in einem Strömungsweg. Mit der Eigen- und/oder Fremderwärmung von temperaturabhängigen Widerständen im Strömungsweg des Mediums lässt sich auf einfache Weise nicht nur das Vorliegen einer Strömung sondern auch die Temperatur des strömenden Mediums erfassen.

## Beschreibung

Die Erfindung betrifft eine Vorrichtung zum Erkennen einer Strömung und/oder zum Messen der Temperatur des strömenden Mediums in einem Strömungsweg, wie sie vorzugsweise als Überwachungsvorrichtung bei Verbrennungs- und Lüftungssystemen verwendet wird. Das Medium kann ein Gas oder eine Flüssigkeit sein.

### Stand der Technik

Es sind verschiedene Vorrichtungen für diese Einsatzfälle bekannt, wobei vorzugsweise Hitzdraht-Anemometer oder Druckschalter zum Einsatz kommen. Diese Elemente sind entweder störanfällig oder zu ungenau, wenn auch die Größe der Strömung z.B. für die Regelung des Verbrennungs- oder Lüftungsvorganges erfasst werden muss. Zudem sind diese Überwachungsvorrichtungen auch aufwändig und daher teuer.

Es ist Aufgabe der Erfindung, eine Vorrichtung der eingangs erwähnten Art zu schaffen, die mit einfachen Mitteln störungsfrei und ohne mechanisch bewegte Teile arbeitet.

### Vorteile der Erfindung

Diese Aufgabe wird nach der Erfindung zum einen dadurch gelöst, dass im Strömungsweg zwei temperaturabhängige, von einer Spannungsquelle gespeiste Widerstände angeordnet sind, von denen einer zusätzlich von einem Heizwiderstand erwärmbar ist, dass die an den Widerständen auftretenden Spannungsabfälle erfassbar und daraus eine Spannungsdifferenz ableitbar ist und dass die Spannungsdifferenz als Kennzeichen für das Auftreten einer Strömung und/oder die Temperatur der Strömung auswertbar ist und zum anderen in gleich effizienter Weise dadurch, dass im Strömungsweg zwei temperaturabhängige Widerstände mit gleicher relativer Widerstandsänderung angeordnet sind, die von einer Spannungsquelle über Vorwiderstände gespeist sind, dass der eine Widerstand hochohmig und der andere Widerstand niederohmig ist, dass die an den Widerständen auftretenden Spannungsabfälle erfassbar und daraus eine Spannungsdifferenz ableitbar ist und dass die Spannungsdifferenz als Kennzeichen für das Auftreten einer Strömung und/oder die Temperatur der Strömung auswertbar ist.

In beiden Fällen sind nur zwei temperaturabhängige Widerstände erforderlich, die von einer Spannungsquelle gespeist sind. Diese Widerstände haben eine bestimmte Kennlinie, die von ihrer Temperatur abhängt, jedoch für eine lange Lebensdauer konstant bleibt und zu definierten Spannungsabfällen führt, die sich aufgrund der Eigen- oder Fremderwärmung und der Temperatur der Strömung ändern. Dabei kann im Ruhezustand, d.h. keine Strömung, eine bestimmte Ausgangssituation in Form der Spannungsdifferenz der beiden Spannungsabfälle an den beiden Widerständen vorgegeben werden. Aus der Änderung der vorgegebenen Ausgangs-Spannungsdifferenz lässt sich das Auftreten, d.h. Einsetzen, der Strömung und/oder die Temperatur der Strömung mit ausreichender Genauigkeit ableiten.

Das Vorhandensein der Strömung lässt sich am einfachsten dadurch ableiten, dass die Spannungsabfälle einer Schwellwertschaltung zuführbar sind, dass eine vorgegebene Spannungsdifferenz das Vorliegen einer Strömung anzeigt und dass die Schwellwertschaltung ein entsprechendes Ausgangssignal abgibt.

Wird einer der beiden temperaturabhängigen Widerstände durch einen Heizwiderstand zusätzlich erwärmt, dann ergibt sich eine Auswertung in der Weise, dass bei fehlender Strömung aufgrund der Erwärmung des mittels des Heizwiderstandes erwärmten Widerstandes sich an den Widerständen unterschiedlich hohe Spannungsabfälle einstellen, die zu einer großen Spannungsdifferenz führen, dass bei strömendem Gas im Strömungsweg die Spannungsdifferenz abnimmt und dass aus der Abnahme der Spannungsdifferenz das Auftreten und/ oder die Temperatur der Strömung ableitbar ist.

Bei der Verwendung von zwei temperaturabhängigen Widerständen mit gleicher relativer Widerstandsänderung ergibt sich eine Auswertung dergestalt, dass bei fehlender Strömung an dem niederohmigen Widerstand ein kleiner Spannungsabfall durch Eigenerwärmung und an dem hochohmigen Widerstand ein großer Spannungsabfall einstellt, dass bei strömendem Gas im Strömungsweg die aus den Spannungsabfällen resultierende Spannungsdifferenz abnimmt und dass aus der Abnahme der Spannungsdifferenz das Auftreten und/oder die Temperatur der Strömung ableitbar ist.

Ist nach einer Weiterbildung vorgesehen, dass den beiden temperaturabhängigen Widerständen Vorwiderstände vorschaltet und damit die Ausgangs-Spannungsabfälle und damit die Ausgangs-Spannungsdifferenz vorgibt, dann kann die Ausgangsstellung der Vorrichtung für fehlende Strömung einjustiert werden, wenn man die Vorwiderstände entsprechend auslegt oder einstellt.

### Zeichnungen

Die Erfindung wird anhand von zwei in der Zeichnung dargestellten Vorrichtungen näher erläutert. Dabei sind die Vorrichtungen als elektrische Blockschaltbilder wiedergegeben. Es zeigen:
- Fig. 1: eine Vorrichtung mit einem zusätzlich erwärmten temperaturabhängigen Widerstand und
- Fig. 2: eine Vorrichtung mit zwei temperaturabhängigen Widerständen mit gleicher, jedoch entgegen gesetzter relativer Widerstandsänderung.

### Ausführungsbeispiel

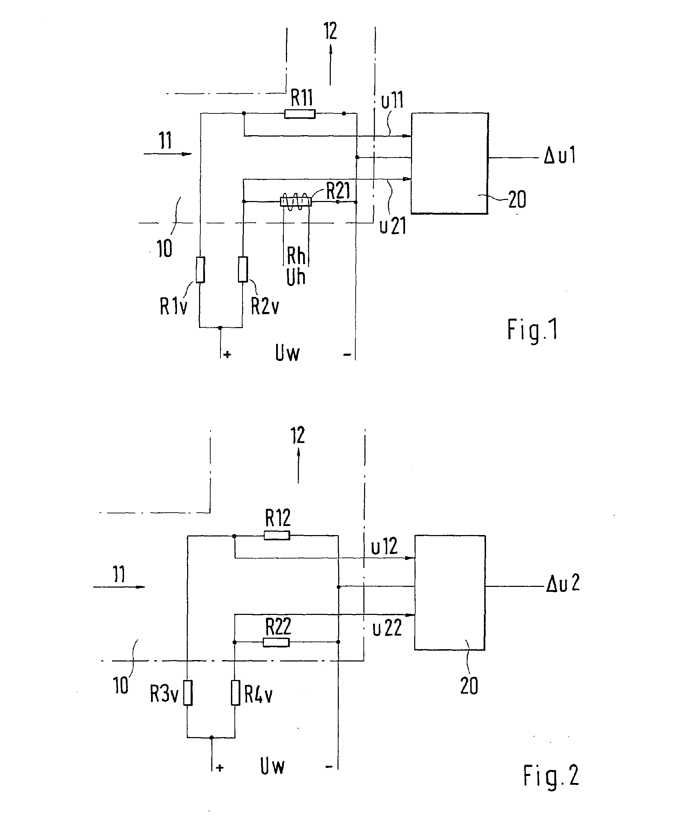

In Fig. 1 ist ein Strömungsweg 10 mit gestrichelten Linien angedeutet, wobei eine Strömung von 11 nach 12 diesen Strömungsweg 10 passieren kann. In dem Strömungsweg 10 sind zwei temperaturabhängige Widerstände R11 und R21 angeordnet, die über zugeordnete Vorwiderstände R1v und R2v von einer Spannungsquelle Uw gespeist werden. Dabei wird der eine Widerstand R21 zusätzlich noch durch einen Heizwiderstand Rh von einer Heizspannung Uh aufgeheizt. Einer Auswerteschaltung 20 werden die an den beiden Widerständen R11 und R21 auftretenden Spannungsabfälle u11 und u21 zugeführt. Die Auswerteschaltung 20 bildet aus den zugeführten Spannungsabfällen u11 und u21 eine Spannungsdifferenz Δu und gibt ein entsprechendes Ausgangssignal ab.

Wird die Vorrichtung nach Fig. 1 nur zum Erkennen einer Strömung im Strömungsweg 10 verwendet, dann kann über die Vorwiderstände R1v und R2v sowie die zusätzliche Erwärmung des Widerstandes R21 ein Ausgangszustand eingestellt werden, der zu unterschiedlichen Spannungsabfällen u11 und u21 und damit zu einer großen Spannungsdifferenz Δu1 führt. Wird dem Strömungsweg 10 heißes Medium zugeführt, dann steigt die Temperatur am Widerstand R11, da dieser nur durch das Medium erwärmt wird. Bei strömendem Medium vermindert sich die Differenz der Spannungsabfälle u11 und u21, da der Spannungsabfall u21 bei fallender Temperatur des Widerstandes R21 zunimmt.

Die Reduzierung des Ausgangssignals Δu1 kann als Kennzeichen für das Einsetzen oder Vorhandensein einer Strömung 11, 12 ausgewertet werden. Die Größe der Änderung Δu1 kann als Kennzeichen für die Temperatur des im Strömungsweg 11, 12 strömenden Mediums ausgewertet werden. Dabei haben sich Schwellwertschalter als Auswerteschaltungen 20 bewährt. Selbstverständlich kann auch eine anders ausgebildete Auswerteschaltung 20 eingesetzt werden, die im Ausgangszustand kein Ausgangssignal Δu1 abgibt und bei strömendem Medium mit einer vorgegebenen Temperatur anspricht und ein Ausgangssignal abgibt. Dies richtet sich nach der Weiterverarbeitung der mit der Vorrichtung abgeleiteten Information.

Die verwendeten Elemente und Schaltungen der Vorrichtung sind einfach und arbeiten störungsfrei, erfordern keine beweglichen Teile und sind kostengünstig.

Dasselbe gilt auch für eine Vorrichtung nach Fig. 2, bei der ebenfalls zwei temperaturabhängige Widerstände R12 und R22 im Strömungsweg 10 angeordnet und von einer Spannungsquelle Uw über zugeordnete Vorwiderstände R3v und R4v gespeist werden. Diese Widerstände R12 und R22 haben gleiche relative Widerstandsänderung bei sich ändernder Temperatur. Dies bedeutet, dass im Ausgangszustand der eine Widerstand, z.B. R12, hochohmig und der andere Widerstand, z.B. R22, durch die Eigenerwärmung niederohmig ist. Mit den Vorwiderständen R3v und R4v kann ein bestimmter Ausgangszustand, d.h. bestimmte Spannungsabfälle u12 und u22 sowie eine Ausgangs-Spannungsdifferenz Δu2 eingestellt werden, die einen hohen Wert besitzen kann. Bei strömendem Medium nähert sich die Spannung R22 der Spannung an R12 an. Die Spannungsdifferenz Δu2 nimmt ab und zwar umso mehr, desto größer die Geschwindigkeit des strömenden Mediums ist. Diese Vorrichtung benötigt keinen zusätzlichen Heizwiderstand, die beiden Widerstände R12 und R22 müssen nur unterschiedliche Widerstandswerte bei gleichem Temperaturkoeffizienten aufweisen, d.h. der Widerstand R22 im Strömungsweg nimmt zu, wenn im Strömungsweg 10 das Medium strömt. Dabei ist die Widerstandsänderung ein Maß für die Strömungsgeschwindigkeit des Mediums. Aus der von der Auswerteschaltung 20 abgegebenen Spannungsdifferenz Δu2 kann dann neben dem Erkennen der Strömung auch die Temperatur des strömenden Gases abgeleitet werden.

Die Funktion der vereinfachten Schaltung ohne Heizwiderstand ist wie folgt: Ein Messwiderstand ist niederohmig, z.B. 1000 Ohm, der andere ist hochohmig, z.B. 100.000 Ohm. Beide werden mit entsprechenden Vorwiderständen beschaltet, z.B. 1000 Ohm bei niederohmigem Widerstand und 100.000 Ohm bei hochohmigem Widerstand. Beide aus den Messwiderständen und den Vorwiderständen gebildeten Spannungsteiler werden an die gleiche Versorgungsspannung angeschlossen, z.B. 24V. Beide Messwiderstände haben relativ die gleiche Kennlinie. Somit wird an beiden Spannungsteilern grundsätzlich die gleiche Spannung gemessen, welche von der Temperatur des Mediums abhängt. Aber in dem niederohmigen Widerstand entsteht durch den fließenden elektrischen Strom Wärme. Diese Wärme führt zu einer Abweichung der beiden Spannungen, weil der hochohmige Messwiderstand praktisch nicht erwärmt wird und auf der Temperatur des Mediums verbleibt. Der hochohmige Widerstand misst so die wirkliche Temperatur des Mediums. Der niederohmige Messwiderstand vereinigt die Funktion des Heizwiderstandes und des Messwiderstandes in einem Bauteil. Bei gleichzeitiger idealer thermischer Kopplung.

Setzt eine Strömung des Mediums ein, so wird aus dem niederohmigen Widerstand die erzeugte Wärme besser abgeführt und die Spannungen der beiden Spannungsteiler gleichen sich an. Diese Angleichung dient der Erkennung der Strömung. Weil beide Widerstände die relativ gleiche Kennlinie haben, wird der Einfluss der Temperatur des Mediums ausgeschaltet.

Zweckmäßig ist die Aufschaltung einer Hysterese zur Erkennung der Strömung bzw. des Endes der Strömung. Dabei muss zur Erkennung der Strömung z.B. eine gute Angleichung erreicht sein, während zur Erkennung des Endes der Strömung eine große Differenz erforderlich ist.

## Patentansprüche

1. Vorrichtung zum Erkennen einer Strömung und/oder Messen der Temperatur des strömenden Mediums in einem Strömungsweg,
**dadurch gekennzeichnet,**
**dass** im Strömungsweg (10) zwei temperaturabhängige, von einer Spannungsquelle (Uw) gespeiste Widerstände (R11, R21) angeordnet sind, von denen einer (z.B. R21) zusätzlich von einem Heizwiderstand (Rh) erwärmbar ist,
**dass** die an den Widerständen (R11, R21) auftretenden Spannungsabfälle (u11, u21) erfassbar und daraus eine Spannungsdifferenz (Δu1) ableitbar ist und
**dass** die Spannungsdifferenz (Δu1) als Kennzeichen für das Auftreten einer Strömung (11, 12) und/oder die Temperatur der Strömung (11, 12) auswertbar ist.

2. Vorrichtung zum Erkennen einer Strömung und/oder Messen der Temperatur des strömenden Mediums in einem Strömungsweg,
**dadurch gekennzeichnet,**
**dass** im Strömungsweg (10) zwei temperaturabhängige Widerstände (R12, R22) mit gleicher relativer Widerstandsänderung angeordnet sind, die von einer Spannungsquelle (Uw) über Vorwiderstände (R3v, R4v) gespeist sind,
**dass** der eine Widerstand (z.B. R21) hochohmig und der andere Widerstand (z.B. R22) niederohmig ist,
**dass** die an den Widerständen (R12, R22) auftretenden Spannungsabfälle (u12, u22) erfassbar und daraus eine Spannungsdifferenz (Δu2) ableitbar ist und
**dass** die Spannungsdifferenz (Δu2) als Kennzeichen für das Auftreten einer Strömung (11, 12) und/oder die Temperatur der Strömung (11, 12) auswertbar ist.

3. Vorrichtung nach Anspruch 1 oder 2,
**dadurch gekennzeichnet,**
**dass** die Spannungsabfälle (u11, u21 bzw. u12, u22) einer Schwellwertschaltung (20) zuführbar sind,
**dass** eine vorgegebene Spannungsdifferenz (Δu1 bzw. Δu2) das Vorliegen einer Strömung (11, 12) anzeigt und
**dass** die Schwellwertschaltung (20) ein entsprechendes Ausgangssignal abgibt.

4. Vorrichtung nach Anspruch 1 oder 3,
**dadurch gekennzeichnet,**
**dass** bei fehlender Strömung (11, 12) aufgrund der Erwärmung des mittels des Heizwiderstandes (Rh) erwärmten Widerstandes (R21) sich an
den Widerständen (R11, R21) unterschiedlich hohe Spannungsabfälle (u11, u21) einstellen, die zu einer großen Spannungsdifferenz (Δu1) führen,
**dass** bei strömendem Medium im Strömungsweg (11, 12) die Spannungsdifferenz (Δu1) abnimmt und
**dass** aus der Abnahme der Spannungsdifferenz (Δu1) das Auftreten und/ oder die Temperatur der Strömung (11, 12) ableitbar ist.

5. Vorrichtung nach Anspruch 2 oder 3,
**dadurch gekennzeichnet,**
**dass** bei fehlender Strömung (11, 12) an dem niederohmigen Widerstand (z.B. R22) ein kleiner Spannungsabfall (u22) und an dem hochohmigen Widerstand (z.B. R12) ein großer Spannungsabfall (u12) einstellt,
**dass** bei strömendem Medium im Strömungsweg (11, 12) die aus den Spannungsabfällen (u 12 und u22) resultierende Spannungsdifferenz (Δu2) abnimmt und
**dass** aus der Abnahme der Spannungsdifferenz (Δu2) das Auftreten und/ oder die Temperatur der Strömung (11, 12) ableitbar ist.

6. Vorrichtung nach einem der Ansprüche 1 bis 5,
**dadurch gekennzeichnet,**
**dass** den beiden temperaturabhängigen Widerständen (R1 1 und R21 bzw. R12 und R22) Vorwiderstände (R1v, R2v bzw. R3v, R4v) vorgeschaltet und damit die Ausgangs-Spannungsabfälle (u11, u21 bzw. u12, u22) und damit die Ausgangs-Spannungsdifferenz (Δu1 bzw. Δu2) vorgegeben wird.
